(19) Europäisches Patentamt
European Patent Office
Office européen des brevets

(11) EP 1 254 933 B1

# (12) EUROPEAN PATENT SPECIFICATION

(45) Date of publication and mention of the grant of the patent:
**25.01.2006 Bulletin 2006/04**

(51) Int Cl.:
***C09D 11/02*** *(2006.01)* *C09B 45/18* *(2006.01)*
*C09B 45/22* *(2006.01)*

(21) Application number: **02076578.0**

(22) Date of filing: **22.04.2002**

## (54) Ink jet ink set and printing method

Tintenstrahldrucktintenset und Tintenstrahldruckverfahren

Assortiment d'encres et procédé pour impression par jet d'encre

(84) Designated Contracting States:
**DE FR GB**

(30) Priority: **03.05.2001 US 848082**
**03.05.2001 US 848081**

(43) Date of publication of application:
**06.11.2002 Bulletin 2002/45**

(73) Proprietor: **EASTMAN KODAK COMPANY**
**Rochester, New York 14650 (US)**

(72) Inventors:
- **Evans, Steven,**
**c/o Eastman Kodak Company**
**Rochester,**
**New York 14550-2201 (US)**
- **Grady, Barbara L.,**
**c/o Eastman Kodak Company**
**Rochester,**
**New York 14550-2201 (US)**
- **Romano, Charles E., Jr.,**
**c/o Eastman Kodak Company**
**Rochester,**
**New York 14550-2201 (US)**

(74) Representative: **Haile, Helen Cynthia et al**
**Kodak Limited**
**Patent Department, W92-3A,**
**Headstone Drive**
**Harrow,**
**Middlesex HA1 4TY (GB)**

(56) References cited:
**EP-A- 1 081 198**

EP 1 254 933 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to an ink jet ink set and printing method that provides images with improved color gamut.

Ink jet printing is a non-impact method for producing images by the deposition of ink droplets in a pixel-by-pixel manner to an image-recording element in response to digital signals. There are various methods which may be utilized to control the deposition of ink droplets on the image-recording element to yield the desired image. In one process, known as continuous ink jet, a continuous stream of droplets is charged and deflected in an imagewise manner onto the surface of the image-recording element, while unimaged droplets are caught and returned to an ink sump. In another process, known as drop-on-demand ink jet, individual ink droplets are projected as needed onto the image-recording element to form the desired image. Common methods of controlling the projection of ink droplets in drop-on-demand printing include piezoelectric transducers and thermal bubble formation. Ink jet printers have found broad applications across markets ranging from industrial labeling to short run printing to desktop document and pictorial imaging.

The inks used in the various inkjet printers can be classified as either dye-based or pigment-based. A dye is a colorant, which is dissolved in the carrier medium. A pigment is a colorant that is insoluble in the carrier medium, but is dispersed or suspended in the form of small particles, often stabilized against flocculation and settling by the use of dispersing agents. The carrier medium can be a liquid or a solid at room temperature in both cases. Commonly used carrier media include water, mixtures of water and organic co-solvents and high boiling organic solvents, such as hydrocarbons, esters, ketones, etc. For aqueous dye-based inks, the dyes needs to be sufficiently soluble in water to prepare a solution that is capable of producing adequate density on the receiving element and stable for extended periods of storage without precipitation. High quality inkjet printing with dye-based inks requires dyes which will provide both bright hue and good light fastness.

To generate full color prints via ink jet printing, ink sets comprising at least cyan, magenta and yellow inks are normally utilized. In addition a black ink is often added to enhance the printing of text and darker colors. The range of colors that can be produced with a given set of inks defines the color gamut of that ink set. For the production of high quality photorealistic images via ink jet printing, ink sets with a large color gamut are preferred. In addition, it is important that the ink sets produce images with good fastness, especially to light.

The choice of the colorants in ink jet systems is critical for both light fastness and color gamut. The color gamut of an ink set is controlled primarily by the spectral absorption characteristics of the component dyes. The primary dyes (e.g., cyan, magenta and yellow) should only absorb light of the required wavelengths (i.e., have relatively narrow absorption bands) and not overlap excessively with the dyes in the complementary inks. While there are many dyes with bright hues that are useful in ink jet printing, many have poor light fastness. Conversely many light stable dyes suitable for ink jet printing have broad absorption bands and give dull colors and limited color gamut.

U.S. Patent 6,183,548 relates to an ink jet ink set comprising a magenta ink, yellow ink and a cyan ink and an optional black ink. However there is a problem with this ink jet ink set in that the color gamut is not as large as one would like.

It is an object of this invention to provide a set of inks capable of producing images via ink jet printing which has a better color gamut than the ink sets of the prior art. Another object of the invention is to provide a printing method using these inks.

These and other objects are achieved in accordance with the present invention comprising a color inkjet ink set for color printing comprising:

(a) a magenta ink comprising a carrier and a water-soluble, transition metal complex of an 8-heterocyclylazo-5-hydroxyquinoline dye;
(b) a yellow ink comprising a carrier and a water-soluble yellow dye;
(c) a cyan ink comprising a carrier and a water-soluble cyan dye; and
(d) an orange and/or green and/or violet ink comprising a carrier and a water-soluble orange and/or green and/or violet dye, said water-soluble orange dye having a hue angle between 58 and 83; said water-soluble green dye having a hue angle between 128 and 189; and said water-soluble violet dye having a hue angle between 235 and 315.

Another embodiment of the invention relates to an ink jet printing method, comprising the steps of:

A) providing an inkjet printer that is responsive to digital data signals;
B) loading the printer with an ink jet recording element;
C) loading the printer with an color ink jet ink set as described above; and:
D) printing on the image-receiving layer using the ink jet ink set in response to the digital data signals.

This color ink jet ink set provides color gamuts suitable for pictorial imaging. A black ink can also be added to further increase the available color gamuts of this ink set.

The ink sets used in the present invention are intended to be used in ink jet printers capable of printing four or

more separate inks. At a minimum, cyan, magenta and yellow inks are required for full-color printing. The ink sets used in this invention include additional color inks that differ in hue from the cyan, magenta and yellow primaries; namely green, orange and/or violet. A black ink may be also be used to make text printing more efficient or to reduce overall ink lay-down when printing dark color areas.

The absorption characteristics of a given image dye will vary to some extent with a change in ink laydown or printed density. This is due to factors such as measurement flare, dye-dye interactions, dye-receiver interactions, dye concentration effects, and the presence of colored impurities in the media. However, by using characteristic vector analysis, sometimes referred to as principal component analysis or eigenvector analysis, one can determine a characteristic absorption curve that is representative of the absorption characteristics of the dye over the complete wavelength and density ranges of interest. The characteristic vector for each dye is thus a two-dimensional array of optical density and wavelength. This technique is described by Albert J. Sant in Photographic Science and Engineering, 5(3), May-June 1961 and by J.L.Simonds in the Journal of the Optical Society of America, **53**(8), 968-974 (1963).
Characteristic vectors thus derived can be used to calculate the color gamuts of ink sets described below as described in the above reference.

Dyes referred to by dye numbers are numbers assigned by The Color Index.

Any water-soluble yellow dye may be employed in the yellow ink of the ink jet ink set employed in the invention. In a preferred embodiment, the yellow dye is Direct Yellow 107, Direct Yellow 132, Direct Yellow 86 or mixtures thereof.

Any water-soluble cyan dye may be employed in the cyan ink of the inkjet ink set employed in the invention. In a preferred embodiment, the cyan dye is Acid Blue 9 or a water-soluble metal phthalocyanine dye such as Direct Blue 199 or Direct Blue 86 or mixtures thereof.

Any water-soluble black dye may be employed in the optional black ink of the ink jet ink set employed in the invention. In a preferred embodiment, the black dye is Reactive Black 31, Direct Black 19, Direct Black 168, Solubilized Sulfur Black or mixtures thereof.

The magenta inks employed in the invention may by formulated with one or more water-soluble, transition metal complexes of 8-heterocyclylazo-5-hydroxyquinoline dyes, represented by Structure 1 (below). These dyes are described in U.S. Patents 5,997,622 and 6,001,161

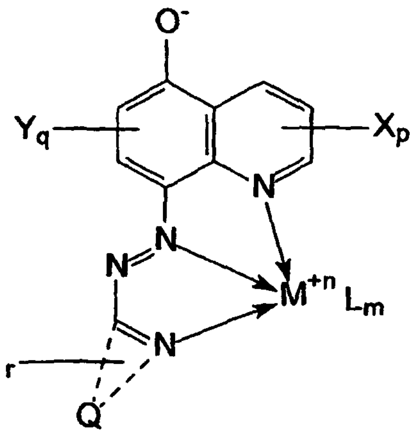

**1** .

wherein:

M represents a polyvalent transition metal ion;

L represents a neutral or anionic ligand;

each X, Y and Z independently represents a substituted or unsubstituted alkyl group of 1 to 6 carbon atoms, a substituted or unsubstituted aryl group of 6 to 10 carbon atoms, a substituted or unsubstituted hetaryl group of 5 to 10 atoms, halogen, cyano, a substituted or unsubstituted alkoxy group of 1 to 6 carbon atoms, hydroxy, a polyoxyalkylene group of 2 to 20 alkylene oxide residues, carboxy (or a salt thereof), sulfo (or a salt thereof), phospho (or a salt thereof), carbamoyl, a substituted or unsubstituted alkyl-, aralkyl-, aryl-, diaryl- or dialkyl carbamoyl group of 1 to 20 carbon atoms, sulfamoyl, a substituted or unsubstituted alkyl-, aralkyl-, aryl-, diaryl- or dialkyl-sulfamoyl group of 1 to 20 carbon atoms, acylamino, sulfonylamino, amino, a substituted or unsubstituted alkyl-, aralkyl-, aryl-, diaryl- or dialkyl-amino group of 1 to 20 carbon atoms or a quaternary ammonium or phosphonium group;

Q represents the atoms necessary to complete a 5- or 6-membered heterocyclic ring;
n represents 2 or 3;
m represents an integer from 1-3;
each p and r independently represents integers from 0-3;
q represents 0, 1 or 2;
two or more of L may be joined together to form a bi- or tridentate ligand or may represent another polydentate dye molecule;
one or more of X, Y and Z, together with the carbon to which they are attached, may independently represent a ring nitrogen; and
any two of X, Y or Z may be joined together to form a 5-7 membered saturated or unsaturated ring;
with the proviso that at least one of X, Y and Z is a water solubilizing group or contains such a group as a substituent.

In a preferred embodiment of the invention, q is 0, Q represents the atoms necessary to complete a pyridine ring, r is 0, M is Ni, n is 2, m is 1, p is 2, X represents 2-methyl and 3-carboxy and L represents a second, identical 8-heterocyclylazo-5-hydroxyquinoline dye residue.

Preferred transition metal ions for M include $Ni^{2+}$, $Cu^{2+}$, $Zn^{2+}$, $Fe^{2+}$, $Fe^{3+}$, $Cr^{3+}$ and $Co^{2+}$.

Examples of neutral ligands for L include water, pyridine, morpholine, ammonia, bipyridine and terpyridine.

Examples of anionic ligands for L include acetate, iminodiacetate, glycine and 8-hydroxyquinoline.

Examples of a substituted or unsubstituted alkyl group for the above substituents include methyl, ethyl, isopropyl, hydroxyethyl, 3-(N,N-dimethylamino)propyl, sulfatoethyl and benzyl. Examples of a substituted or unsubstituted aryl group include phenyl, naphthyl 4-chlorophenyl and 2-carboxyphenyl. Examples of a substituted or unsubstituted hetaryl group include pyridyl, imidazolyl and quinolyl. Examples of halogen include chloro, fluoro, bromo and iodo. Examples of a substituted or unsubstituted alkoxy group include methoxy, isopropoxy, 2-hydroxyethoxy and carboxymethoxy. Useful salts of carboxy, sulfo, phospho and sulfato include sodium, lithium, potassium, triethanolammonium, pyridinium and tetramethylammonium. Examples of a substituted or unsubstituted alkyl-, aralkyl-, aryl-, diaryl- or dialkyl carbamoyl group include N-methylcarbamoyl, N-methyl-N-(3sulfophenyl)-carbamoyl, N-p-(trimethylammonium)phenylcarbamoyl and N,N-bis (4-carboxyphenyl)carbamoyl. Examples of a substituted or unsubstituted alkyl-, aralkyl-, aryl-, diaryl- or dialkyl sulfamoyl group include N-methylsulfamoyl, N-methyl-N-(3sulfophenyl)-sulfamoyl, N-p-(trimethylammonium)phenylsulfamoyl and N,N-bis (4-carboxyphenyl)sulfamoyl. Examples of an acylamino group include acetamido, carboxyethylacetamido and benzamido. Examples of a ureido group include n-methylureido, ureido and 3,5-bis carboxyphenylureido. Examples of a sulfonylamino group include methanesulfonamido, p-toluenesulfonamido and 2-(trimethlyammonium)ethanesulfonamido. Examples of a substituted or unsubstituted alkyl-, aralkyl-, aryl- diaryl- or dialkyl-amino group include methylamino, N,N-dimethylamino, carboxymethylamino and 2,5-disulfoanilino. Examples of a quaternary ammonium group include trimethylammonium and benzyldimethylammonium. Examples of a phosphonium group include triphenylphosphonium and trimethlyphosphonium.

Examples of heterocyclic ring systems completed by the atoms represented by Q include pyridine, pyrazine, quinoline, thiazole, benzothiazole and pyrazole.

Specific dyes according to Structure 1 useful in this invention include:

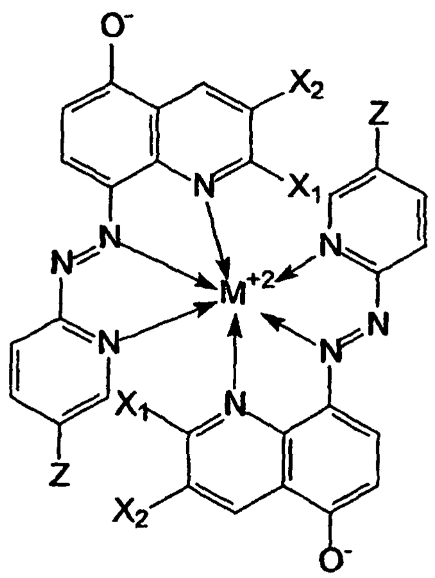

**Table 1**

| Dye | M | $X_1$ | $X_2$ | Z | λ-max[1] |
|---|---|---|---|---|---|
| 1 | Ni | Cl | $CO_2H$ | $SO_2NHCH(CH_3)_2$ | 559 |
| 2 | Cu | Cl | $CO_2H$ | $SO_2NHCH(CH_3)_2$ | 547 |
| 3 | Ni | Cl | $CO_2Na$ | H | 550 |
| 4 | Ni | Cl | $CO_2H$ | H | 551 |
| 5 | Ni | H | $CO_2H$ | H | 546 |
| 6 | Ni | $CH_3$ | $CO_2H$ | H | 552 |
| 7 | Ni | $CO_2H$ | $CO_2H$ | H | 554 |
| 8 | Ni | $OC_2H_5$ | $CO_2H$ | H | 546 |
| 9 | Ni | $SC_3H_6SO_3^- Na^+$ | $CH_3$ | H | 563 |
| 1. Measured in 1% aqueous triethanolamine | | | | | |

U.S. Patent 6,183,548, discussed above, describes a set of cyan, magenta, yellow and optionally black inks comprising specific dyes including Dyes A,B,C and D (below). These ink sets are designated hereinafter as the base sets CMY and CMYK as described in the examples below.

A. Direct Blue 199, available as Duasyn Turquoise Blue FRL-SF® from Clariant Corp.
B. Kodak Lightfast Magenta 1®, a transition metal complex of an 8-heterocyclylazo-5-hydroxyquinoline dye manufactured by Eastman Kodak, (see Table 1 below)
C. Direct Yellow 132, available as ProJet Yellow 1 G® from Zeneca Specialties.
D. Reactive Black 31, available as Duasyn Black KRL-SF® from Clariant Corp.

One or more additional inks comprising green, orange and/or violet dyes may be used in addition to the above base sets to give ink sets with a larger color gamut. Any water-soluble orange and/or green and/or violet dye may be used in the invention. In a preferred embodiment, the orange dye has a hue angle between 58 and 83. In another preferred embodiment, the green dye has a hue angle between 128 and 189. In yet another preferred embodiment, the violet dye has a hue angle between 235 and 315.

Following are examples of specific orange, green and violet dyes which can be used in the invention:

E. Acid Orange 7 (Keyacid Orange II, available from Keystone Aniline Corp.)
F. Keyacid Fast Orange G, available from Keystone Aniline Corp.
G. Acid Orange 8 (Keyacid Orange RO, available from Keystone Aniline Corp.)
H. Acid Orange 10 (Keyacid Orange 2G, available from Keystone Aniline Corp.)
I. Acid Orange 12 (Orange G, available from Aldrich Chemical Co.)
J. Food Yellow 3 (FD&C Yellow #6, available from Tricon Colors)
K. Reactive Yellow 84, available from Dye-Land
L. Acid Orange 24 (Resorcine Brown B, available from Aldrich Chemical Co.)
M. Acid Orange 33 (BRYtracid Fast Orange GS, available from BRY Chemicals)
N. Reactive Orange 5 (BRYreact Brilliant Orange K-GN, available from BRY Chemicals)
O. Reactive Orange 20 (BRYreact Orange KE-G, available from BRY Chemicals)
P. Reactive Orange 107, available from Dye-Land
Q. Reactive Orange 1 (BRYreact Brilliant Orange X-GN 140%, available from BRY Chemicals)
R. Orange LX-10432 (a mixture of Food Yellow 3 and Acid Orange 10) available from Pylam Corp.
S. Levolfast Green BD, available from Keystone Aniline Corp..
T. Acid Green 25 (Keyacid Green 25, available from Keystone Aniline Corp.)
U. Reactive Green 12, available from Tricon Colors
V. Acid Green 3 (Guinea Green B, available from Aldrich Chemical Co.)
W. Acid Green 5 (Light Green SF, available from Aldrich Chemical Co.)
X. Acid Green 1 (Napthol Green B, available from Aldrich Chemical Co.)
Y. BRYtracid Brilliant Green 3GM 150%, available from BRY Chemicals

Z. Acid Green 16 (BRYacid Green V, available from BRY Chemicals)
AA. Bright Green 125961 available from Pylam Corp.
BB. Acid Violet 17, available from Aldrich Chemical Co.

In a preferred embodiment of the invention, the water-soluble orange dye is Reactive Orange 5, Acid Orange 10 or Acid Orange 12.

In another preferred embodiment of the invention, the water-soluble green dye is Reactive Green 12, Acid Green 25, Acid Green 5 or Acid Green 3.

In still another preferred embodiment of the invention, the water-soluble violet dye is Acid Violet 17.

In general, the inks employed in this invention comprise the above dyes at a concentration of from 0.2 to 10 %, preferably from 0.4 to 3% by weight of the ink jet ink composition.

A humectant is usually employed in the ink jet compositions employed in the invention to help prevent the ink from drying out or crusting in the orifices of the printhead. Examples of humectants which can be used include polyhydric alcohols, such as ethylene glycol, diethylene glycol(DEG), triethylene glycol, propylene glycol, tetraethylene glycol, polyethylene glycol, glycerol, 2-methyl-2,4-pentanediol, 2-ethyl-2-hydroxymethyl-1,3-propanediol(EHMP), 1,5 pentanediol, 1,2-hexanediol, 1,2,6-hexanetriol and thioglycol; lower alkyl mono- or di-ethers derived from alkylene glycols, such as ethylene glycol mono-methyl or mono-ethyl ether, diethylene glycol mono-methyl or mono-ethyl ether, propylene glycol mono-methyl or mono-ethyl ether, triethylene glycol mono-methyl or mono-ethyl ether, diethylene glycol di-methyl or di-ethyl ether, poly(ethylene glycol) monobutyl ether (PEGMBE), and diethylene glycol monobutylether(DEGMBE); nitrogen-containing compounds, such as urea, 2-pyrrolidinone, N-methyl-2-pyrrolidinone, and 1,3-dimethyl-2-imidazolidinone; and sulfur-containing compounds such as dimethyl sulfoxide and tetramethylene sulfone.

Preferred humectants for the inks employed in the invention include DEG, glycerol, DEGMBE, PEGMBE, 1,2-hexanediol, 1,5-pentanediol, urea, 2-pyrrolidinone, EHMP and mixtures thereof.

Water-miscible organic solvents may also be added to the aqueous inks employed in the invention to help the ink penetrate the receiving substrate, especially when the substrate is a highly sized paper. Examples of such solvents include alcohols, such as methyl alcohol, ethyl alcohol, n-propyl alcohol, isopropyl alcohol, n-butyl alcohol, sec-butyl alcohol, t-butyl alcohol, iso-butyl alcohol, furhuyl alcohol, and tetrahydrofurfuryl alcohol; ketones or ketoalcohols such as acetone, methyl ethyl ketone and diacetone alcohol; ethers, such as tetrahydrofuran and dioxane; and esters, such as, ethyl lactate, ethylene carbonate and propylene carbonate.

The amount of aqueous carrier employed is in the range of approximately 70 to 98 weight %, preferably approximately 90 to 98 weight %, based on the total weight of the ink. A mixture of water and a polyhydric alcohol, such as diethylene glycol, is useful as an aqueous carrier. In a preferred embodiment, the inks contain from 5 to 60 weight % of water miscible organic solvent. Percentages are based on the total weight of the aqueous carrier.

Surfactants may be added to the ink to adjust the surface tension to an appropriate level. The surfactants may be anionic, cationic, amphoteric or nonionic and used at levels of 0.01 to 1% of the ink composition. Preferred surfactants include Surfynol 465® (available from Air Products Corp.) and Tergitol 15-S-5® (available from Union Carbide).

A biocide may be added to the ink composition employed in the invention to suppress the growth of micro-organisms such as molds, fungi, etc. in aqueous inks. A preferred biocide for the ink composition employed in the present invention is Proxel® GXL (Zeneca Specialties Co.) at a final concentration of 0.0001-0.5 wt. %.

The pH of the aqueous ink compositions employed in the invention may be adjusted by the addition of organic or inorganic acids or bases. Useful inks may have a preferred pH of from 2 to 10, depending upon the type of dye being used. Typical inorganic acids include hydrochloric, phosphoric and sulfuric acids. Typical organic acids include methanesulfonic, acetic and lactic acids. Typical inorganic bases include alkali metal hydroxides and carbonates. Typical organic bases include ammonia, triethanolamine and tetramethylethlenediamine.

A typical ink composition employed in the invention may comprise, for example, the following components by weight: colorant (0.05-20%), water (20-95%), a humectant (5-70%), water miscible co-solvents (2-20%), surfactant (0.1-10%), biocide (0.05-5%) and pH control agents (0.1-10%).

Additional additives which may optionally be present in the ink jet ink compositions employed in the invention include thickeners, conductivity enhancing agents, anti-kogation agents, drying agents, and defoamers.

The ink jet inks described above may be employed in ink jet printing wherein liquid ink drops are applied in a controlled fashion to an ink receptive layer substrate, by ejecting ink droplets from a plurality of nozzles or orifices of the print head of an inkjet printer.

Commercially available ink jet printers use several different schemes to control the deposition of the ink droplets. Such schemes are generally of two types: continuous stream and drop-on-demand.

In drop-on-demand systems, a droplet of ink is ejected from an orifice directly to a position on the ink receptive layer by pressure created by, for example, a piezoelectric device, an acoustic device, or a thermal process controlled in accordance digital data signals. An ink droplet is not generated and ejected through the orifices of the print head unless it is needed. Ink jet printing methods, and related printers, are commercially available and need not be described

in detail.

Ink jet inks employed in the present invention can be used in any of the popular ink jet printing systems, including thermal or piezoelectric drop-on-demand printers and continuous inkjet printers. Of course, the specific ink formulations will vary depending upon the type of ink jet printing system.

Ink-receptive substrates useful in ink j et printing are well known to those skilled in the art. Representative examples of such substrates are disclosed in U.S. Patents 5,605,750; 5,723,211; and 5,789,070 and EP 813 978 A1.

The following examples illustrate the utility of the present invention.

Preparation of Inks.

Inks were prepared by mixing the dyes with water, diethylene glycol, glycerol, and Surfynol® 465 and optionally triethanolamine. The mixture was stirred in a warm water bath until the dye was in solution.

The amount of dye used was based on the solution absorption spectrum in water such that the weight % of dye in the ink is equal to [1/solution mass absorbtivity in L/g-cm]x100. The other components were: 6 weight % glycerol, 6 weight % diethylene glycol, 2.0 weight % triethanolamine (if needed to aid dissolution) and 0.5 weight % Surfynol® 465.

Printing of Test Images.

Each of the above inks was filtered with a 0.45 $\mu$m syringe filter and loaded into one of the color chambers of an empty Lexmark Z51 ink cartridge and then printed onto Kodak Premium Picture Paper using a Lexmark Z51 printer. A step wedge image consisting of eleven color patches (1 cm x 1 cm) varying in ink coverage from 10 to 100% in 10% increments was printed.

Evaluation of Test Images

After allowing sufficient time for drying, the densities of the step wedge images from above were read using a Gretag Spectrolino® Spectrophotometer over the wavelength range of 380 - 730 nm in intervals of 10 nanometers. A gas-filled tungsten, type A illumination was used with a 4 mm nominal aperture and the measurement geometry employed was 45°/0° ring optic.

Color gamut and Hue Angle

From the densities measured above, characteristic vector analysis was used to construct a characteristic absorption curve over the range of the visible spectrum (380-730 nm) for each of the inks. The characteristic vector for each ink is a two-dimensional array of optical density vs. wavelength. This technique is described by A. J. Sant in *Photographic Science and Engineering,* 5(3), May-June, 1961, and by J. L. Simonds in the *Journal of the Optical Society of America,* **53**(8), 968-974 (1963).

These characteristic vectors were used to define the color characteristics of each of the printed ink images and the combinations thereof used in the calculation of the color gamuts for the various ink sets listed in the following tables. CIElab coordinates (a*, b* and L*) were calculated, assuming a reflection density of 2.0 at the lambda max of the printed sample and are listed in Table 2.

Hue angle correlates with hue which is defined to be the attribute of a visual sensation according to which an area appears to be similar to one of the perceived colors, red, yellow, green, and blue, or to a combination of two of them. Hue angle was calculated using the characteristic vectors described above, assuming a reflection density of 2.0 at the lambda max of the printed sample and are also listed in Table 2. The standard CIB 1976 a, b, hue angle formula was used, e.g.:

$$h_{ab} = \arctan(b^*/a^*)$$

where a* and b* are CIELab coordinates of the dye.

Chroma (C*) relates to the brightness or saturation of a given color. Chroma values for each printed image above were calculated from the CIElab coordinates calculated for each dye assuming a reflection density of 2.0 at the lambda max of the printed sample and also listed in Table 2.

$$C^* = \sqrt{[(a^*)^2 + (b^*)^2]}$$

Theoretical color gamuts were calculated by the following procedure for the CMY (Dyes A,B and C) and CMYK (Dyes A,B, C and D) base sets and the ink sets formed by adding designated orange, green and/or violet dyes to the base sets. The results are set forth in Table 3. In general, the larger the gamut, the more possible colors that a given ink set can reproduce.

For the purpose of this invention, color gamut is specified using the conventional metric generally associated with reflection prints, which is CIELAB. The 1931 CIE 2° standard observer color matching functions as well as the CIE defined illuminant D5000 were used. This information and the characteristic vectors described above were used to calculate the color gamut at a particular L* value for each set of inks, using the method described in the *Journal of Photographic Science,* **38**, 163 (1990). Note that for this calculation no light scatter is assumed. The color gamut values cited in the following table represent the sum of the a* vs. b* areas at nine different L* slices (10, 20, 30, 40, 50, 60, 70, 80, and 90) calculated for each ink set. The areas at each L* slice were determined using a trapezoidal rule summation along the b* axis.

**Table 2**

| Dye | a* | b* | L* | Hue Angle | Chroma (C*) |
|---|---|---|---|---|---|
| A | -58.6 | -45.5 | 59.9 | 217.9 | 74.2 |
| B | 89.0 | -36.3 | 48.7 | 337.8 | 96.1 |
| C | -5.3 | 104.1 | 95.2 | 92.9 | 104.2 |
| D | 13.2 | 1.3 | 12.3 | 5.7 | 13.2 |
| B | 44.2 | 103.3 | 80.0 | 66.9 | 112.3 |
| F | 54.4 | 99.2 | 70.9 | 61.3 | 113.1 |
| G | 55.0 | 88.7 | 75.1 | 58.2 | 104.4 |
| H | 30.6 | 104.6 | 85.0 | 73.7 | 109.0 |
| I | 39.1 | 116.7 | 81.9 | 71.5 | 123.1 |
| J | 43.9 | 103.0 | 79.4 | 66.9 | 112.0 |
| K | 15.4 | 115.4 | 88.2 | 82.4 | 116.4 |
| L | 30.2 | 110.0 | 80.6 | 74.7 | 114.1 |
| M | 48.3 | 91.9 | 77.7 | 62.3 | 103.8 |
| N | 30.2 | 107.7 | 83.5 | 74.3 | 111.8 |
| O | 50.0 | 105.1 | 76.0 | 64.6 | 116.4 |
| P | 18.0 | 121.1 | 88.0 | 81.5 | 122.4 |
| Q | 39.7 | 117.2 | 81.7 | 71.3 | 123.8 |
| R | 42.2 | 104.1 | 80.6 | 67.9 | 112.4 |
| S | -51.2 | 18.3 | 39.4 | 160.3 | 54.4 |
| T | -69.8 | -9.6 | 51.2 | 187.9 | 70.4 |
| U | -82.8 | 26.3 | 72.3 | 162.4 | 86.9 |
| V | -75.1 | -10.6 | 71.3 | 188.0 | 75.8 |
| W | -76.1 | -2.7 | 75.1 | 182.0 | 76.1 |
| X | -45.6 | 47.3 | 58.9 | 134.0 | 65.7 |
| Y | -86.7 | 19.0 | 76.0 | 167.6 | 88.7 |
| Z | -92.2 | 16.5 | 74.0 | 169.8 | 93.7 |

Table continued

| Dye | a* | b* | L* | Hue Angle | Chroma (C*) |
|---|---|---|---|---|---|
| AA | -71.1 | 84.8 | 77.2 | 130.0 | 110.7 |
| BB | 54.6 | -94.1 | 38.2 | 300.1 | 108.8 |

**Table 3**

| Base Set | Additional Dye | Color Gamut |
|---|---|---|
| CMY | None (Control) | 55073 |
| CMY | AA | 68990 |
| CMY | E | 72739 |
| CMY | F | 68991 |
| CMY | G | 71985 |
| CMY | H | 73308 |
| CMY | I | 72728 |
| CMY | J | 72151 |
| CMY | K | 69171 |
| CMY | L | 68586 |
| CMY | M | 72089 |
| CMY | N | 71539 |
| CMY | O | 71243 |
| CMY | P | 70765 |
| CMY | Q | 72712 |
| CMY | R | 72746 |
| CMY | S | 61680 |
| CMY | T | 60027 |
| CMY | U | 64754 |
| CMY | V | 63254 |
| CMY | W | 64928 |
| CMY | X | 61922 |
| CMY | Y | 67121 |
| CMY | Z | 67444 |
| CMY | BB | 68581 |
| CMY | AA + BB | 82809 |
| CMY | AA + H | 84027 |
| CMY | H+BB | 87166 |
| CMYK | None (Control) | 61842 |
| CMYK | AA | 71711 |
| CMYK | H | 75602 |
| CMYK | BB | 73158 |

The above results show that the use of orange and/or green and/or violet inks along with a base ink set comprising a magenta ink containing a water-soluble, transition metal complex of an 8-heterocyclylazo-5-hydroxyquinoline dye, a yellow ink, a cyan ink and optionally a black ink gives significantly larger color gamut than the base sets alone.

## Claims

1. A color ink jet ink set comprising:

(a) a magenta ink comprising a carrier and a water-soluble, transition metal complex of an 8-heterocyclylazo-5-hydroxyquinoline dye;
(b) a yellow ink comprising a carrier and a water-soluble yellow dye; (c) a cyan ink comprising a carrier and a water-soluble cyan dye; and
(d) an orange and/or green and/or violet ink comprising a carrier and a water-soluble orange and/or green and/or violet dye; said water-soluble orange dye having a hue angle between 58 and 83; said water-soluble green dye having a hue angle between 128 and 189; and said water-soluble violet dye having a hue angle between 235 and 315.

2. The inkjet ink set of Claim 1 wherein said water-soluble, transition metal complex of an 8-heterocyclylazo-5-hydroxyquinoline dye is represented by the following structure:

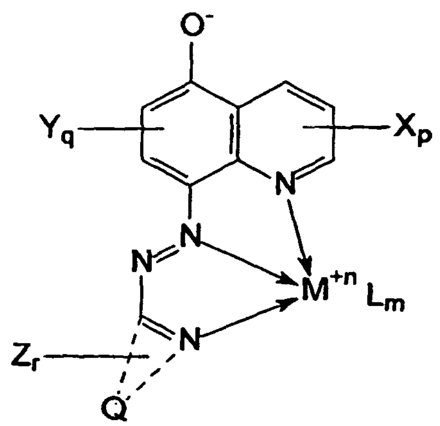

**1**

wherein:

M represents a polyvalent transition metal ion;
L represents a neutral or anionic ligand;
each X, Y and Z independently represents a substituted or unsubstituted alkyl group of 1 to 6 carbon atoms, a substituted or unsubstituted aryl group of 6 to 10 carbon atoms, a substituted or unsubstituted hetaryl group of 5 to 10 atoms, halogen, cyano, a substituted or unsubstituted alkoxy group of 1 to 6 carbon atoms, hydroxy, a polyoxyalkylene group of 2 to 20 alkylene oxide residues, carboxy, sulfo, phospho, carbamoyl, a substituted or unsubstituted alkyl-, aralkyl-, aryl-, diaryl- or dialkyl carbamoyl group of 1 to 20 carbon atoms, sulfamoyl, a substituted or unsubstituted alkyl-, aralkyl-, aryl-, diaryl- or dialkyl-sulfamoyl group of 1 to 20 carbon atoms, acylamino, sulfonylamino, amino, a substituted or unsubstituted alkyl-, aralkyl-, aryl-, diaryl- or dialkyl-amino group of 1 to 20 carbon atoms or a quaternary ammonium or phosphonium group;
Q represents the atoms necessary to complete a 5- or 6-membered heterocyclic ring;
n represents 2 or 3;
m represents an integer from 1-3;
each p and r independently represents integers from 0-3;
q represents 0, 1 or 2;
two or more of L may be joined together to form a bi- or tridentate ligand or may represent another polydentate dye molecule;

one or more of X, Y and Z, together with the carbon to which they are attached, may independently represent a ring nitrogen; and
any two of X, Y or Z may be joined together to form a 5-7 membered saturated or unsaturated ring;
with the proviso that at least one of X, Y and Z is a water solubilizing group or contains such a group as a substituent.

**3.** The ink jet ink set of Claim 5 wherein q is 0, Q represents the atoms necessary to complete a pyridine ring, r is 0, M is Ni, n is 2, m is 1, p is 2, X represents 2-methyl and 3-carboxy and L represents a second, identical 8-heterocyclylazo-5-hydroxyquinoline dye residue.

**4.** The ink jet ink set of Claim 1 wherein said cyan dye is a copper phthalocyanine dye or Acid Blue 9.

**5.** The ink jet ink set of Claim 7 wherein said copper phthalocyanine dye is Direct Blue 199 or Direct Blue 86.

**6.** The inkjet ink set of Claim 1 wherein said yellow dye is Direct Yellow 107, Direct Yellow 132 or Direct Yellow 86.

**7.** An ink jet printing method, comprising the steps of:

A) providing an ink jet printer that is responsive to digital data signals;
B) loading said printer with an ink jet recording element;
C) loading said printer with the color ink jet ink set of Claim 1; and
D) printing on said image-receiving layer using said ink jet ink set in response to said digital data signals.

## Revendications

**1.** Assortiment d'encres pour impression par jet d'encre couleur comprenant :

(a) une encre magenta comprenant un véhicule et un colorant 8-hétérocyclylazo-5-hydroxyquinoline complexé par un métal de transition, soluble dans l'eau ;
(b) une encre jaune comprenant un véhicule et un colorant jaune soluble dans l'eau ;
(b) une encre cyan comprenant un véhicule et un colorant cyan soluble dans l'eau ; et
(d) une encre orange et/ou verte et/ou violette comprenant un véhicule et un colorant orange et/ou vert et/ou violet soluble dans l'eau ; ledit colorant orange soluble dans l'eau ayant un angle de teinte compris entre 58 et 83 ; ledit colorant vert soluble dans l'eau ayant un angle de teinte compris entre 128 et 189 ; et ledit colorant violet soluble dans l'eau ayant un angle de teinte compris entre 235 et 315.

**2.** Assortiment d'encres pour impression par jet d'encre selon la revendication 1, dans lequel ledit colorant 8-hétérocyclylazo-5-hydroxyquinoline complexé par un métal de transition, soluble dans l'eau, est représenté par la structure suivante :

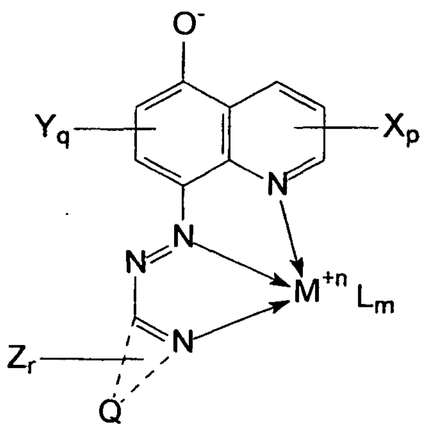

1

dans laquelle :

M représente un ion de métal de transition polyvalent ;
L représente un ligand neutre ou anionique ;
chaque X, Y et Z représente séparément un groupe alkyle substitué ou non substitué contenant 1 à 6 atomes de carbone, un groupe aryle substitué ou non substitué contenant 6 à 10 atomes de carbone, un groupe hétaryle substitué ou non substitué contenant 5 à 10 atomes, un halogène, un groupe cyano, un groupe alcoxy substitué ou non substitué contenant 1 à 6 atomes de carbone, un groupe hydroxy, un groupe polyoxyalkylène contenant 2 à 20 résidus d'oxyde d'alkylène, un groupe carboxy, un groupe sulfo, un groupe phospho, un groupe carbamoyle, un groupe alkyl-, aralkyl-, aryl-, diaryl- ou dialkyl-carbamoyle substitué ou non substitué contenant 1 à 20 atomes de carbone, un groupe sulfamoyle, un groupe alkyl-, aralkyl-, aryl-, diaryl- ou dialkyl-sulfamoyle substitué ou non substitué contenant 1 à 20 atomes de carbone, un groupe acylamino, un groupe sulfonylamino, un groupe amino, un groupe alkyl-, aralkyl-, aryl-, diaryl- ou dialkyl-amino substitué ou non substitué contenant 1 à 20 atomes de carbone ou un groupe ammonium quaternaire ou phosphonium ;
Q représente les atomes nécessaires pour compléter un hétérocycle à 5 ou 6 membres ;
n est égal à 2 ou 3 ;
m représente un nombre entier de 1 à 3 ;
p et r représentent chacun séparément des nombres entiers de 0 à 3 ;
q est égal à 0, 1 ou 2 ;
au moins deux ligands L peuvent être réunis pour former un ligand bidenté ou tridenté ou peuvent représenter une autre molécule de colorant polydenté ;
un ou plusieurs des groupes X, Y et Z, associés à l'atome de carbone auquel ils sont liés, peuvent représenter séparément un azote nucléaire ; et
deux quelconques des groupes X, Y et Z peuvent être réunis pour former un noyau à 5 à 7 membres, saturé ou insaturé ;
à condition que au moins l'un de X, Y et Z représente un groupe solubilisant dans l'eau ou contienne un tel groupe comme substituant.

**3.** Assortiment d'encres pour impression par jet d'encre selon la revendication 5, dans lequel q est égal à 0, Q représente les atomes nécessaires pour compléter un noyau pyridine, r est égal à 0, M représente Ni, n est égal à 2, m est égal à 1, p est égal à 2, X représente un groupe 2-méthyle et 3-carboxy et L représente un second résidu identique de colorant 8-hétérocyclylazo-5-hydroxyquinoline.

**4.** Assortiment d'encres pour impression par jet d'encre selon la revendication 1, dans lequel ledit colorant cyan est un colorant à base de phtalocyanine de cuivre ou le colorant Acid Blue 9.

**5.** Assortiment d'encres pour impression par jet d'encre selon la revendication 7, dans lequel ledit colorant de type phtalocyanine de cuivre est le colorant Direct Blue 199 ou Direct Blue 86.

**6.** Assortiment d'encres pour impression par jet d'encre selon la revendication 1, dans lequel ledit colorant jaune est le colorant Direct Yellow 107, Direct Yellow 132 ou Direct Yellow 86.

**7.** Procédé d'impression par jet d'encre comprenant les étapes suivantes :

A) fourniture d'une imprimante à jet d'encre sensible aux signaux de données numériques ;
B) chargement dans ladite imprimante d'un élément d'enregistrement par jet d'encre ;
C) chargement dans ladite imprimante d'un assortiment d'encres pour impression par jet d'encre couleur selon la revendication 1 ; et
D) impression sur ladite couche réceptrice d'image en utilisant ledit assortiment d'encres pour impression par jet d'encre en réponse auxdits signaux de données numériques.

## Patentansprüche

**1.** Tintenstrahl-Farbtintenset, mit:

a) einer einen Träger und einen wasserlöslichen Übergangsmetallkomplex eines 8-Heterocyclylazo-5-hydroxychinolinfarbstoffs umfassenden Magenta-Tinte;

b) einer einen Träger und einen wasserlöslichen Gelbfarbstoff umfassenden Gelb-Tinte; c) einer einen Träger und einen wasserlöslichen Cyanfarbstoff umfassenden Cyan-Tinte; und
d) einer einen Träger und einen wasserlöslichen Orange- und/oder Grün- und/oder Violettfarbstoff umfassenden Orange- und/oder Grün- und/oder Violett-Tinte, wobei der wasserlösliche Orange-Farbstoff einen Farbtonwinkel zwischen 58 und 83, der wasserlösliche Grün-Farbstoff einen Farbtonwinkel zwischen 128 und 189 und der wasserlösliche Violett-Farbstoff einen Farbtonwinkel zwischen 235 und 315 aufweist.

**2.** Tintenstrahl-Farbtintenset nach Anspruch 1, worin der wasserlösliche Übergangsmetallkomplex eines 8-Heterocyclylazo-5-hydroxychinolinfarbstoffs durch die folgende Struktur dargestellt wird:

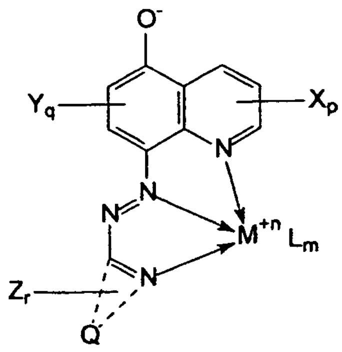

1

worin:

M ein mehrwertiges Übergangsmetall-Ion darstellt;
L ein neutraler oder anionischer Ligand ist;
jede Gruppe X, Y und Z unabhängig voneinander eine substituierte oder unsubstituierte Alkyl-Gruppe von 1 bis 6 Kohlenstoff-Atomen, eine substituierte oder unsubstituierte Aryl-Gruppe von 6 bis 10 Kohlenstoff-Atomen, eine substituierte oder unsubstituierte Heteroaryl-Gruppe von 5 bis 10 Atomen, Halogen, Cyano, eine substituierte oder unsubstituierte Alkoxy-Gruppe von 1 bis 6 Kohlenstoff-Atomen, Hydroxy, eine Polyoxyalkylen-Gruppe von 2 bis 20 Alkylenoxidresten, Carboxy, Sulfo, Phospho, Carbamoyl, eine substituierte oder unsubstituierte Alkyl-, Aralkyl-, Aryl-, Diaryl- oder Dialkylcarbamoyl-Gruppe von 1 bis 20 Kohlenstoff-Atomen, Sulfamoyl, eine substituierte oder unsubstituierte Alkyl-, Aralkyl-, Aryl-, Diaryl- oder Dialkylsulfamoyl-Gruppe von 1 bis 20 Kohlenstoff-Atomen, Acylamino, Sulfonylamino, Amino, eine substituierte oder unsubstituierte Alkyl-, Aralkyl-, Aryl-, Diaryl- oder Dialkylamino-Gruppe von 1 bis 20 Kohlenstoff-Atomen oder eine quaternäre Ammonium- oder Phosphonium-Gruppe darstellt;
Q die Atome verkörpert, die für die Vervollständigung eines 5- oder 6-gliedrigen heterocyclischen Rings erforderlich sind;
n 2 oder 3 ist;
m eine ganze Zahl von 1 bis 3 ist;
p und r unabhängig voneinander ganze Zahlen von 0 bis 3 sind;
q 0, 1 oder 2 ist;
zwei oder mehr L unter Bildung eines bidentat oder tridentat koordinierenden Liganden verbunden werden können, oder ein anderes polydentat koordinierendes Farbstoffmolekül darstellen;
ein oder mehrere X, Y und Z, zusammen mit dem Kohlenstoff, an den sie gebunden sind, unabhängig voneinander Ringstickstoffe sein können; und
beliebige zwei X, Y oder Z unter Bildung eines 5- bis 7-gliedrigen gesättigten oder ungesättigten Rings miteinander verbunden werden können;
unter dem Vorbehalt, dass mindestens ein X, Y und Z eine wassersolubilisierende Gruppe ist oder eine solche Gruppe als Substituenten enthält.

**3.** Tintenstrahl-Farbtintenset nach Anspruch 5, worin q gleich 0 ist, Q die Atome zur Vervollständigung eines Pyridinrings darstellt, r gleich 0 ist, M Nickel ist, n gleich 2 ist, m gleich 1 ist, p gleich 2 ist, X 2-Methyl und 3-Carboxy und L ein zweiter identischer 8-Heterocyclylazo-5-hydroxychinolin-Farbstoffrest ist.

4. Tintenstrahl-Farbtintenset nach Anspruch 1, worin es sich bei dem Cyanfarbstoff um einen Kupferphthalocyanin-Farbstoff oder Säureblau 9 handelt.

5. Tintenstrahl-Farbtintenset nach Anspruch 1, worin es sich bei dem Kupferphthalocyanin-Farbstoff um Direktblau 199 oder Direktblau 86 handelt.

6. Tintenstrahl-Farbtintenset nach Anspruch 1, worin es sich bei dem Gelbfarbstoff um Direktgelb 107, Direktgelb 132 oder Direktgelb 86 handelt.

7. Tintenstrahl-Druckverfahren, mit folgenden Schritten:

A) Bereitstellen eines Tintenstrahldruckers, der auf digitale Datensignale anspricht;
B) Beladen des Druckers mit einem Tintenstrahl-Aufzeichnungselement;
C) Beladen des Druckers mit dem Tintenstrahl-Farbtintenset nach Anspruch 1; und
D) Bedrucken der Bildempfangsschicht mit dem Tintenstrahl-Farbtintenset in Erwiderung der digitalen Datensignale.